# EUROPEAN PATENT SPECIFICATION

(11) **EP 0 584 848 B1**
(45) Date of publication and mention of the grant of the patent: **25.11.1998**
(21) Application number: 93202104.1
(22) Date of filing: 19.07.1993
(51) Int. Cl.: H04L 29/06, H04L 1/00

(54) **Method for testing a protocol, and system for applying the method**
Verfahren und Anordnung zur Protokollprüfung
Méthode et système de test de protocole

(30) Priority: 21.08.1992 NL 9201498
(43) Date of publication of application: 02.03.1994
(73) Proprietor: Koninklijke PTT Nederland N.V., 2509 CH Den Haag (NL)
(72) Inventor: Witteman, Marcus Franciscus, NL-2613 RH Delft (NL); Bakker, Franciscus Cornelia, NL-2262 EW Leidschendam (NL)

(56) References cited:
- IEEE GLOBAL TELECOMMUNICATIONS CONFERENCE vol. 1, no. 6.5, November 1984, ATLANTA,US; pages 157 - 163 KUROSAWA ET ALL 'A NEW SPECIFICATION AND VALIDATION METHOD FOR COMMUNICATION PROTOCOLS - A PROPOSAL OF A COMPOSITE STATE DIAGRAM MIXED WITH LOGICAL RELATIONS -'
- COMPUTER COMMUNICATION REVIEW vol. 19, no. 4, September 1989, NEW-YORK,US; pages 283 - 294 CHAN ET AL 'AN IMPROVED PROTOCOL TEST GENERATION PROCEDURE BASED ON UIOS'

## Description

### A Background to the invention

The invention relates to a method for testing a protocol in which events occur which have defined relationships with one another. A method of this type is generally known. If the protocol shows completely deterministic behaviour (which means that all possible sequential orders of events which may occur are predictable), the testing of the protocol comprises the generation, on the basis of all predictable possible sequential orders, of sequences of allowed successive events. Examples of test methods can be found under "References" in part C. If the protocol shows completely non-deterministic behaviour, testing of the protocol comprises the writing out, in a simple manner, of the completely non-deterministic behaviour (for example by writing out in terms of all permutations in protocol behaviour) and the subsequent generation, on the basis of all possible sequential orders, of sequences of allowed successive events.

A protocol which shows both deterministic and non-deterministic behaviour is considerably less simple to test, in particular as the number of events which may occur increases and as the complexity of the relationships between these events increases. Known methods, for protocols like these, use so-called "trial and error" methods which are of course time-consuming and thus not very efficient, and whose completeness, moreover, cannot be verified.

### B Summary of the invention

The object of the invention is, inter alia, to provide a method of the type mentioned in the preamble, which tests protocols efficiently, independent of the fact whether these show completely deterministic, completely non-deterministic or both deterministic and non-deterministic behaviour.

To this end, the method according to the invention is characterised in that
- the method comprises a first submethod for determining whether an event y is permitted to occur by
   - checking, if a further event x has not occurred, whether a relationship between the event x and the event y implies that the event y is not permitted to occur before the event x has occurred, in which case the combination is not allowed,
   - checking, if a further event x has occurred, whether a relationship between the event x and the event y implies that the event y is not permitted to occur after the event x has occurred and whether a relationship between the event y and the event x implies that the event x is not permitted to precede the event y, in which cases the combination is not allowed,
   - establishing, in all other cases, that the combination is allowed and repeating the first submethod in order to determine whether the event y is permitted to occur in combination with another further event,
- the method comprises a second submethod for finding a subsequent allowed event q in the case of an event p by
   - defining the event p as being an event which has occurred and appending it to a sequence of allowed events which have occurred,
   - repeating, if the event q has already occurred, the second submethod in order to find another subsequent allowed event,
   - checking, if the event q has not occurred, by applying the first submethod whether the event q is permitted to occur in combination with the event p, and by
      - appending, in the case of an allowed combination, the event q to a sequence of allowed events which have occurred and repeating the second submethod in order to find a subsequent allowed event in the case of the event q,
      - repeating, in the case of a non-allowed combination, the second submethod in order to find another subsequent allowed event in the case of the event p, and
- redefining the event p as being an event which has not occurred and removing it from the sequence of allowed events which have occurred,
- the method finds all possible sequences of allowed events by
   - applying the first submethod to every possible first event, and
   - applying the second submethod to all possible first events found.

The invention is based on the inventive insight that the method can be split into two submethods: the first for determining whether an event is permitted to occur, and the second for forming sequences of allowed events, the first submethod being consulted regularly, which second method is moreover of recursive type.

The first submethod is used to perform a check whether the event y is permitted to occur, given the further event x which has not yet occurred or indeed has already occurred: if the event x has not yet occurred, a check is performed whether a relationship between the event x and the event y implies that the event y is not permitted to occur before the event x has occurred, and if the event x has indeed already occurred, a check is performed whether a relationship between the event x and the event y implies that the event y is not permitted to occur after the event x has occurred and whether a relationship between the event y and the event x implies that the event x is not permitted to have preceded the event y. In all these cases, the combination is not allowed, and in all other cases the combination is indeed allowed and this first submethod is repeated for another further event.

The second submethod is used to search for the next allowed event q in the case of the event p, which at the start of the second submethod is defined as being an event which has occurred and is appended to a sequence of allowed events which have occurred: if the event q has already occurred, the second submethod is repeated in order to find another subsequent allowed event, and if the event q has not yet occurred, a check is performed on the basis of the first submethod whether the event q is permitted to occur given the event p, in the case of an allowed combination the event q being appended to a sequence of allowed events which have occurred and the second submethod being repeated in order to find a subsequent allowed event in the case of the event q (recursivity), and, in the case of a non-allowed combination, the second submethod being repeated in order to find another subsequent allowed event in the case of the event p. The second submethod terminates with the redefinition of the event p as being an event which has not occurred and the removal of the event p from the sequence of allowed events which have occurred.

The method according to the invention finds all the possible sequences of allowed events by applying the first submethod to every possible first event (a check, therefore, being performed whether the event y is permitted to occur given, successively, all the other events which have not yet occurred, in which case the event y is a possible first event found) and by applying the second submethod to all possible first events found.

In a first embodiment, the method according to the invention is characterised in that the method comprises a third submethod for determining whether a sequence of allowed events is complete, a condition specifying, of each event, whether the occurrence of this event is or is not mandatory, by
- checking, if an arbitrarily chosen event v has not occurred, whether a condition relating to the event v implies that the event v must occur, in which case the sequence is not complete, and in the other case, if the arbitrarily chosen event v has not occurred, by
   - checking, if a further event w has not occurred, whether a relationship between the event v and the event w and a relationship between the event w and the event v imply that at least one of the two events v and w must occur, in which case the sequence is not complete,
   - checking, if the further event w has occurred, whether a relationship between the event v and the event w and a relationship between the event w and the event v imply that, if the event w has occurred, the event v must occur likewise, in which case the sequence is not complete, and
   - repeating the third submethod with another further event, and
- repeating, if the arbitrarily chosen event v has occurred, the third submethod with another arbitrarily chosen event in order to determine whether a sequence of allowed events is complete.

The third submethod is used to perform a check whether a sequence of allowed events is complete. In doing so it is necessary for a condition of each event to specify whether the occurrence of said event is or is not mandatory. If an arbitrarily chosen event v has not occurred, a check is carried out whether a condition relating to the event v implies that the event v must occur, in which case the sequence is not complete, a check being carried out in the other case, if a further event w has not occurred, whether a relationship between the event v and the event w and a relationship between the event w and the event v imply that at least one of the two events v and w must occur, in which case the sequence is not complete, a check being carried out, if the further event w has occurred, whether a relationship between the event v and the event w and a relationship between the event w and the event v imply that, if the event w has occurred, the event v must occur likewise, in which case the sequence is not complete, and in all other cases the third submethod being repeated with another further event, and if the arbitrarily chosen event v has indeed occurred, the third submethod is repeated with another arbitrarily chosen event in order to determine whether a sequence of allowed events is complete.

The third submethod can therefore be used to determine whether a sequence is complete.

The invention further relates to a system for applying the method.

A further object of the invention is, inter alia, to provide a system of the abovementioned type, which tests protocols efficiently, independent of the fact whether these show completely deterministic, completely non-deterministic or both deterministic and non-deterministic behaviour.

To this end, the system according to the invention is characterised in that the system is provided with means for storing
- at least one event code which is representative for an event which may occur,
- at least one status code which is representative for a status of this event,
- at least one relationship code which is representative for a relationship between this event and another event, and
- at least one combination code which is representative for the allowedness of a combination of events,
in which the system, for determining whether an event y is permitted to occur, is designed for an analysis of a first type by
- disallowing, in the case of a status code related to a further event x having a first value and a relationship code related to the events x and y having a first value, the combination and assigning a negative combination code,
- disallowing, in the case of a status code related to a further event x having a second value and a relationship code related to the events x and y having a second value and a relationship code related to the events y and x having a third value, the combination and assigning a negative combination code,
- allowing, in all other cases, the combination and assigning a positive combination code and repeating the analysis of a first type for determining whether the event y is permitted to occur in combination with another further event,
in which the system, for finding a subsequent allowed event q in the case of an event p, is designed for an analysis of a second type by
- assigning a status code having a second value to the event p and appending the event p to a sequence of allowed events which have occurred,
- repeating, in the case of a status code having a second value related to event q, the analysis of a second type for finding another subsequent allowed event,
- performing, in the case of a status code having a first value related to event q, an analysis of a first type for determining whether the event q is permitted to occur in combination with the event p and by
   - appending, in the case of a positive combination code, the event q to a sequence of allowed events which have occurred and performing an analysis of a second type for finding a subsequent allowed event in the case of the event q, and
   - performing, in the case of a negative combination code, an analysis of a second type for finding another subsequent allowed event in the case of the event p,
- assigning a status code having a first value to the event p and removing the event p from a sequence of allowed events which have occurred,
in which the system, for finding all possible sequences of allowed events, is designed for
- performing an analysis of a first type for every possible first event,
- performing an analysis of a second type for all possible first events found.

In this context, event codes each represent an event which may occur, and status codes each represent the status of such an event (a status code having a first value corresponds, for example, to non-occurrence so far, and a status code having a second value corresponds to earlier occurrence of the event). Furthermore, relationship codes each represent a relationship between an event and another event (a relationship code having a first value relating to a relationship between the event x and the event y corresponds, for example, to the event y not being permitted to occur before the event x has occurred, a relationship code having a second value relating to a relationship between the event x and the event y corresponds, for example, to the event y not being permitted to occur after the event x has occurred, and a relationship code having a third value relating to a relationship between the event y and the event x corresponds, for example, to the event x not being permitted to precede the event y) and combination codes each represent the allowedness or non-allowedness of a combination of events (a positive combination code corresponds, for example, to the allowedness of a combination, and a negative combination code to the non-allowedness). The analysis of a first type in this context in fact relates to the first submethod, and the analysis of a second type then relates to the second submethod).

In a first embodiment, the system according to the invention is characterised in that the system is provided with means for storing at least one occurrence code which is representative for the mandatory occurrence of an event, which system, for determining whether a sequence of allowed events is complete, is designed for an analysis of a third type by
- establishing, in the case of a status code, related to an arbitrarily chosen event v, having a first value and a positive occurrence code related to the arbitrarily chosen event v, that a sequence is incomplete and by, in the case of a negative occurrence code related to the arbitrarily chosen event v and of a status code, related to the arbitrarily chosen event v, having a first value
   - establishing, in the case of a status code, related to a further event w, having a first value and a relationship code, related to the events v and w, having a fourth value and a relationship code, related to the events w and v, having a fifth value, that a sequence is incomplete,
   - establishing, in the case of a status code, related to a further event w, having a second value and a relationship code, related to the events v and w, having a sixth value and a relationship code, related to the events w and v, having a seventh value, that a sequence is incomplete, and
   - subsequently performing an analysis of a third type with another further event w, and
- performing, in the case of a status code, related to an arbitrarily chosen event v, having a second value, an analysis of a third type with another arbitrarily chosen event to determine whether a sequence of allowed events is complete.

In this context, occurrence codes each represent a condition defining whether the occurrence of an event is mandatory or not (a positive occurrence code corresponds, for example, to the event being required to occur and a negative occurrence code to the event not absolutely being required to occur). Furthermore, the relationship codes each represent the relationship between an event and another event (a relationship code having a fourth value relating to a relationship between the event v and the event w and a relationship code having a fifth value relating to a relationship between the event w and the event v correspond, for example, to at least one of the events v and w being required to occur, a relationship code having a sixth value relating to a relationship between the event v and the event w, and a relationship code having a seventh value relating to a relationship between the event w and the event v correspond, for example, to the event v being required to occur if the event w has already occurred). The analysis of a third type in this context in fact relates to the third submethod.

### C References

1. Kurosawa, K., et al.; IEEE GLOBAL TELECOMM. CONF., vol. 1, no. 6.5, November 1984, Atlanta, US; pp. 157-163
2. Chan, W., et al.; COMPUTER COMM. REV., vol. 19, no. 4, September 1989, New York, US; pp. 283-294.

### D Illustrative embodiment

The invention will be explained in more detail with reference to an illustrative embodiment depicted in the figures, in which:
Figure 1 shows a flow chart of the first submethod of the method according to the invention,
Figure 2 shows a flow chart of the second submethod of the method according to the invention,
Figure 3 shows a flow chart of the method according to the invention, and
Figure 4 shows a flow chart of the third submethod of an embodiment of the method according to the invention.

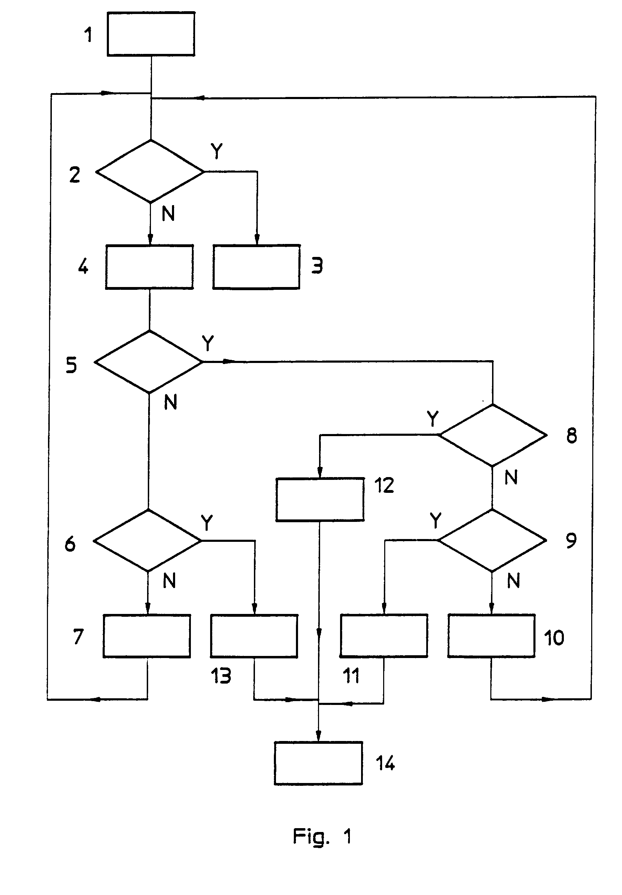

In the flow chart depicted in Figure 1, the boxes have the following meaning:
- box: meaning
- 1: the first submethod is applied to an event y in order to determine whether the event y is permitted to occur
- 2: is there no further event x not equal to the event y left in store?
if yes: goto box 3
if no: goto box 4
- 3: the first submethod is terminated positively
- 4: an event x still in store is selected
- 5: has this event x occurred?
if yes: goto box 8
if no: goto box 6
- 6: does a relationship between the event x and the event y imply that the event y is not permitted to occur before the event x has occurred?
if yes: goto box 13
if no: goto box 7
- 7: the event y is permitted to occur before the event x, goto box 2
- 8: does a relationship between the event x and the event y imply that the event y is not permitted to occur after the event x has occurred?
if yes: goto box 12
if no: goto box 9
- 9: does a relationship between the event y and the event x imply that the event x is not permitted to precede the event y?
if yes: goto box 11
if no: goto box 10
- 10: the event y is permitted to occur after the event x, goto box 2
- 11: the event x is not permitted to precede the event y, goto box 14
- 12: the event y is not permitted to occur after the event x, goto box 14
- 13: the event y is not permitted to occur before the event x, goto box 14
- 14: the first submethod is terminated negatively

The first submethod of the method according to the invention as depicted in the flow chart of Figure 1 proceeds as follows. When it is applied to the event y (box 1) a check is first carried out whether there is no further event x not equal to the event y left in store (box 2). If that is so, the first submethod is terminated positively (box 3) which means that the event y is permitted to occur. If there is at least one further event x in store, such an event x is chosen (box 4), whereafter a check is carried out whether this event x has occurred (box 5). If the event x has occurred, a check is carried out whether a relationship between the event x and the event y implies that the event y is not permitted to occur after the event x has occurred (box 8), in which case it is found that the event y is not permitted to occur after the event x (box 12) and the first submethod is terminated negatively (box 14). This means that the event y is not permitted to occur. In the other case, a check is carried out whether a relationship between the event y and the event x implies that the event x is not permitted to precede the event y (box 9), in which case it is found that the event x is not permitted to precede the event y (box 11) and the first submethod is terminated negatively (box 14). In the other case it is found that the event y is permitted to occur after the event x (box 10), whereupon a check is again carried out whether no further event x not equal to the event y is left in store (box 2), etc. If the event x has not occurred, a check is carried out whether a relationship between the event x and the event y implies that the event y is not permitted to occur before the event x has occurred (box 6), in which case it is found that the event y is not permitted to occur before the event x (box 13) and the first submethod is terminated negatively (box 14). In the other case it is found that the event y is permitted to occur before the event x (box 7), whereupon a check is again carried out whether no further event x not equal to the event y is left in store (box 2), etc.

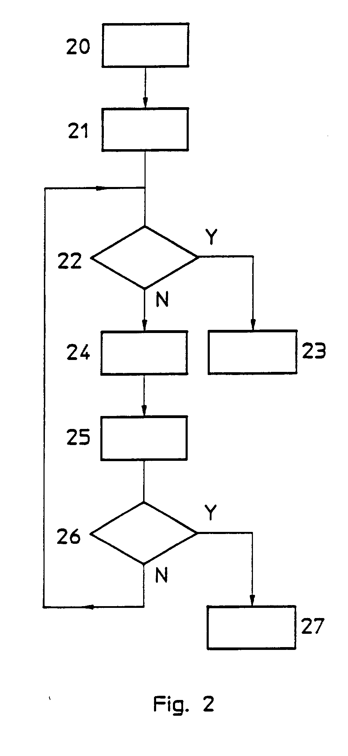

In the flow chart depicted in Figure 2, the boxes have the following meaning:
- box: meaning
- 20: the second submethod is applied to an event p in order to find a subsequent allowed event q in the case of the event p
- 21: the event p is defined as an event which has occurred and is appended to a sequence of allowed events which have occurred
- 22: is there no event q which has not yet occurred and is not equal to the event p left in store?
if yes: goto box 23
if no: goto box 24
- 23: the event p is redefined as an event which has not occurred, and is removed from a sequence of allowed events which have occurred, and the second submethod is terminated
- 24: an event q still in store is selected
- 25: the first submethod is applied with y = q
- 26: is the event q allowed?
if yes: goto box 27
if no: goto box 22
- 27: the second submethod is applied to the event q in order to find a subsequent allowed event in the case of the event q

The second submethod of the method according to the invention as depicted in the flow chart of Figure 2 proceeds as follows. When it is applied to the event p (box 20), the event p is first defined as an event which has occurred and is appended to a sequence of allowed events which have occurred (box 21). A check is then carried out whether there is no event q which has not yet occurred and which is not equal to the event p left in store (box 22). If this is so, the event p is redefined as an event which has not occurred and is removed from a sequence of allowed events which have occurred, and the second submethod is terminated (box 23), which means that no subsequent allowed event q in the case of event p has been found. If there is at least one event q which has not occurred and which is not equal to the event p left in store, this event q still in store is selected (box 24), and the first submethod depicted by means of the flow chart of Figure 1 is applied to the event q (ie. y = q, box 25). Using this procedure thus determines whether the event q is permitted to occur or not, given the event p which has already occurred (and possible events which have occurred earlier and which already form an allowed combination with the event p, as a result of the recursivity of the second submethod), in other words whether the sequence (terminating with) p,q is a sequence of allowed events. If the event q is not allowed, a check is again carried out whether there is no event q which has not yet occurred and which is not equal to the event p left in store (box 22), and if the event q is indeed allowed, the second submethod is applied to the event q in order to find a subsequent allowed event in the case of the event q (this thus shows the recursivity of the second submethod). Thus the second submethod is used to find all possible subsequent allowed events q in the case of the event p, and thus all the sequences of allowed events are therefore completed which start with or (as a result of the recursivity) are continued with the event p.

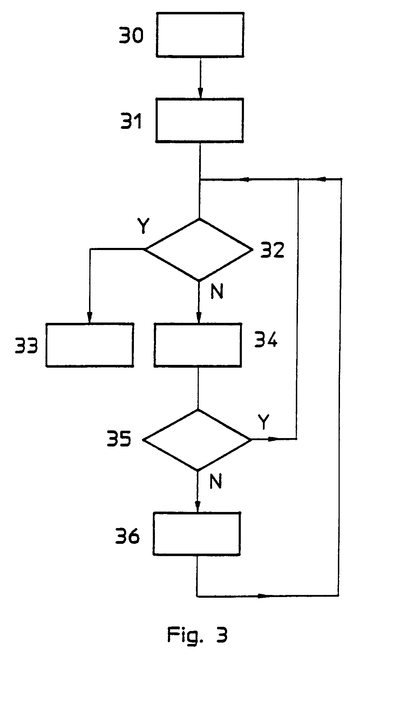

In the flow chart depicted in Figure 3, the boxes have the following meaning:
- box: meaning
- 30: the method according to the invention is applied
- 31: each event is defined as an event which has not occurred
- 32: is there no event left in store?
if yes: goto box 33
if no: goto box 34
- 33: the method according to the invention is terminated
- 34: the first submethod is applied to an event which has not yet occurred
- 35: is this event not permitted to occur as a first event?
if yes: goto box 32
if no: goto box 36
- 36: the second submethod is applied to said first event, goto box 32

The method according to the invention (box 30) as depicted in the flow chart of Figure 3 proceeds as follows. Each event is defined as an event which has not occurred (box 31). A check is then carried out whether there is no event left in store (box 32). If this is so, the method according to the invention is terminated (box 33), and if this is not so, an event which has not yet occurred is selected, and the first submethod is applied to said chosen event which has not yet occurred (box 34). By applying the first submethod it is then determined whether this event which has not yet occurred is or is not permitted to occur as a first event of a sequence of events. If this is not permitted, a check is again carried out whether there is no event which has not yet occurred left in store (box 32), etc. If the event which has not yet occurred is permitted to occur as a first event, the second submethod is applied to said first event (box 36), by means of which then all sequences of allowed events starting with said first event are found. A check is then again carried out whether there is no event which has not yet occurred left in store (box 32), etc. Ultimately, all the sequences of allowed events will be found by means of the method according to the invention.

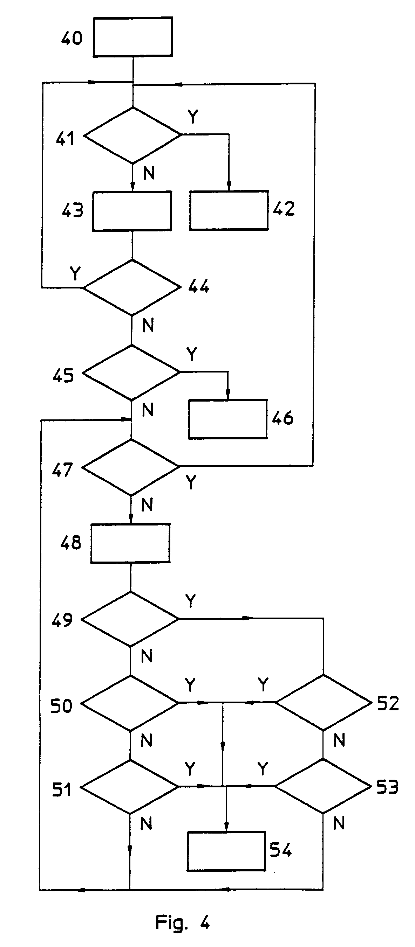

In the flow chart depicted in Figure 4, the boxes have the following meaning:
- box: meaning
- 40: the third submethod is applied
- 41: is there no event v left in store?
if yes: goto box 42
if no: goto box 43
- 42: the third submethod is terminated positively
- 43: an event v still in store is selected
- 44: has said event v occurred?
if yes: goto box 41
if no: goto box 45
- 45: does a condition relating to the event v imply that this event must occur?
if yes: goto box 46
if no: goto box 47
- 46: the third submethod is terminated negatively
- 47: is there no further event w not equal to the event v left in store?
if yes: goto box 41
if no: goto box 48
- 48: an event w still in store is selected
- 49: has said event w occurred?
if yes: goto box 52
if no: goto box 50
- 50: does a relationship between the event v and the event w imply that at least one of the two events v and w must occur?
if yes: goto box 54
if no: goto box 51
- 51: does a relationship between the event w and the event v imply that at least one of the two events v and w must occur?
if yes: goto box 54
if no: goto box 47
- 52: does a relationship between the event v and the event w imply that, if the event w has occurred, the event v must likewise occur?
if yes: goto box 54
if no: goto box 53
- 53: does a relationship between the event w and the event v imply that, if the event w has occurred, the event v must likewise occur?
if yes: goto box 54
if no: goto box 47
- 54: the third submethod is terminated negatively

The third submethod of the method according to the invention as depicted in the flow chart of Figure 4 proceeds as follows. The third submethod for determining whether a sequence of allowed events is complete (box 40) is applied. First of all, a check is carried out whether there is no event v left in store (box 41). If that is so, the third submethod is terminated positively (box 42), which means that a complete sequence has been found. If, on the other hand, an event v is still in store, said event v is chosen (box 43) and a check is carried out whether or not said event v has occurred (box 44). If that is so, a check is again carried out whether there is no event v left in store (box 41) etc. If the event v has not occurred, a check is carried out whether a condition relating to the event v implies that the latter must occur (box 45), in which case the third submethod is terminated negatively (box 46). This means that a sequence of allowed events has been found which is not yet complete. If said condition does not imply this, a check is carried out whether there is no further event w not equal to the event v left in store (box 47). If that is so, a check is again carried out whether no event v is left in store (box 41) etc. If there is still an event w in store, said event w is chosen (box 48), whereupon a check is carried out whether the event w has occurred (box 49). If the event w has not occurred, a check is carried out whether a relationship between the event v and the event w implies that at least one of the two events v and w must occur (box 50), in which case the third submethod is terminated negatively (box 54). In the other case a check is carried out whether a relationship between the event w and the event v implies that at least one of the two events v and w must occur (box 51). If that is so, the third submethod is terminated negatively (box 54) and if that is not so, a check is again carried out whether there is no further event w not equal to the event v left in store (box 47) etc. If the event w has indeed occurred, a check is carried out whether a relationship between the event v and the event w implies that, if the event w has occurred, the event v must likewise occur (box 52), in which case the third submethod is terminated negatively (box 54). In the other case, a check is carried out whether a relationship between the event w and the event v implies that, if the event w has occurred, the event v must likewise occur (box 53). If that is so, the third submethod is terminated negatively (box 54), and if that is not so, a check is again carried out whether there is no further event w not equal to the event v left in store (box 47), etc.

The third submethod should be called, in Figure 3, just before (above) box 32, and in Figure 2 just before (above) box 22, to ensure that monitoring for the completeness of sequences of allowed events is adequate. This prevents the second submethod depicted in Figure 2 and the method depicted in Figure 3 according to the invention from being applied for an unnecessarily long time. The third submethod therefore makes the method according to the invention more efficient.

Table 1 depicts all the possible relationships between the events a and b (R_{ab}), and the conditions (Rₐₐ and R_{bb}) whether the occurrence of the events a and b is mandatory or not (M = Mandatory, O = Optional = non-mandatory).

**Tabel 1**

| No | Set | Rₐₐ | R_{bb} | R_{ab} |
|---|---|---|---|---|
| | 1 event occurs | | | |
| 1 | a or b | O | O | 1 |
| | 0 or 1 event occurs | | | |
| 2 | 0 or a or b | O | O | 2 |

| | 2 events occur | | | |
|---|---|---|---|---|
| 3 | (a,b) | M | M | 3 |
| 4 | (a,b) or (b,a) | M | M | 4 |

| | 0 or 2 events occur | | | |
|---|---|---|---|---|
| 5 | 0 or (a,b) | O | O | 5 |
| 6 | 0 or (a,b) or (b,a) | O | O | 6 |

| | 1 or 2 events occur | | | |
|---|---|---|---|---|
| 7 | a or (a,b) | M | O | 7 |
| 8 | a or (b,a) | M | O | 8 |
| 9 | a or b or (a,b) | O | O | 9 |
| 10 | a or (a,b) or (b,a) | M | O | 10 |
| 11 | a or b or (a,b) or (b,a) | O | O | 11 |

| | 0,1 or 2 events occur | | | |
|---|---|---|---|---|
| 12 | 0 or a or (a,b) | O | O | 12 |
| 13 | 0 or a or (b,a) | O | O | 13 |
| 14 | 0 or a or b or (a,b) | O | O | 14 |
| 15 | 0 or a or (a,b) or (b,a) | O | O | 15 |
| 16 | 0 or a or b or (a,b) or (b,a) | O | O | 16 |

Table 1 shows all the possible permutations between the events a and b. If precisely one event occurs (No. 1) this means that either the event a or the event b occurs. This is indicated by Set No. 1 "a or b" (R_{ab} = 1). If precisely two events occur (Nos. 3,4) this means that first the event a and then the event b occurs (indicated by Set No. 3 "(a,b)", R_{ab} = 3) or that first one of the two events occurs and then the other (indicated by Set No. 4 "(a,b) or (b,a)", R_{ab} = 4). Here, the third possible Set "(b,a)" seems to have been forgotten, but this can be obtained by interchanging the events a and b in Set "(a,b)" and is in fact indicated by set No. 3. Table 1 further shows in the case of which possible permutations the occurrence of the events a and b is mandatory (M) and when this is not so (Optional = O), this relating to the conditions mentioned earlier concerning certain events. In the case of Set No. 1, both the events a and b are obviously not mandatory (Optional), because only one of the two is permitted to occur, and in the case of Sets Nos. 3 and 4, both events obviously are indeed mandatory (M) because both then must occur.

With reference to Table 1, the meaning of some of the boxes depicted in Figures 1 and 4 can be made clearer. The following boxes have the following meaning:
- box: meaning
- 6: is R_{xy} = 3, 5, 7 or 12? (does a relationship between the event x and the event y imply that the event y is not permitted to occur before the event x has occurred?); this relates to the relationship of the first type
- 8: is R_{xy} = 1, 2, 8 or 13? (does a relationship between the event x and the event y imply that the event y is not permitted to occur after the event x has occurred?); this relates to the relationship of the second type
- 9: is R_{yx} = 1, 2, 3, 5, 7, 9, 12 or 14? (does a relationship between the event y and the event x imply that the event x is not permitted to precede the event y?); this relates to the relationship of the third type
- 45: is Rᵥᵥ = M? (does a condition relating to the event v imply that the latter must occur?)
- 50: is R_{vw} = 1, 9 or 11? (does a relationship between the event v and the event w imply that at least one of the two events v and w must occur?); this relates to the relationship of the fourth type
- 51: is R_{wv} = 1, 9 or 11? (does a relationship between the event w and the event v imply that at least one of the two events v and w must occur?); this relates to the relationship of the fifth type
- 52: is R_{vw} = 6, 13 or 15? (does a relationship between the event v and the event w imply that, if the event w has occurred, the event v must likewise occur?); this relates to the relationship of the sixth type
- 53: is R_{wv} = 5 or 6? (does a relationship between the event w and the event v imply that, if the event w has occurred, the event v must likewise occur?); this relates to the relationship of the seventh type

An algorithm corresponding to the method according to the invention could, if written in a kind of BASIC language, look as follows: 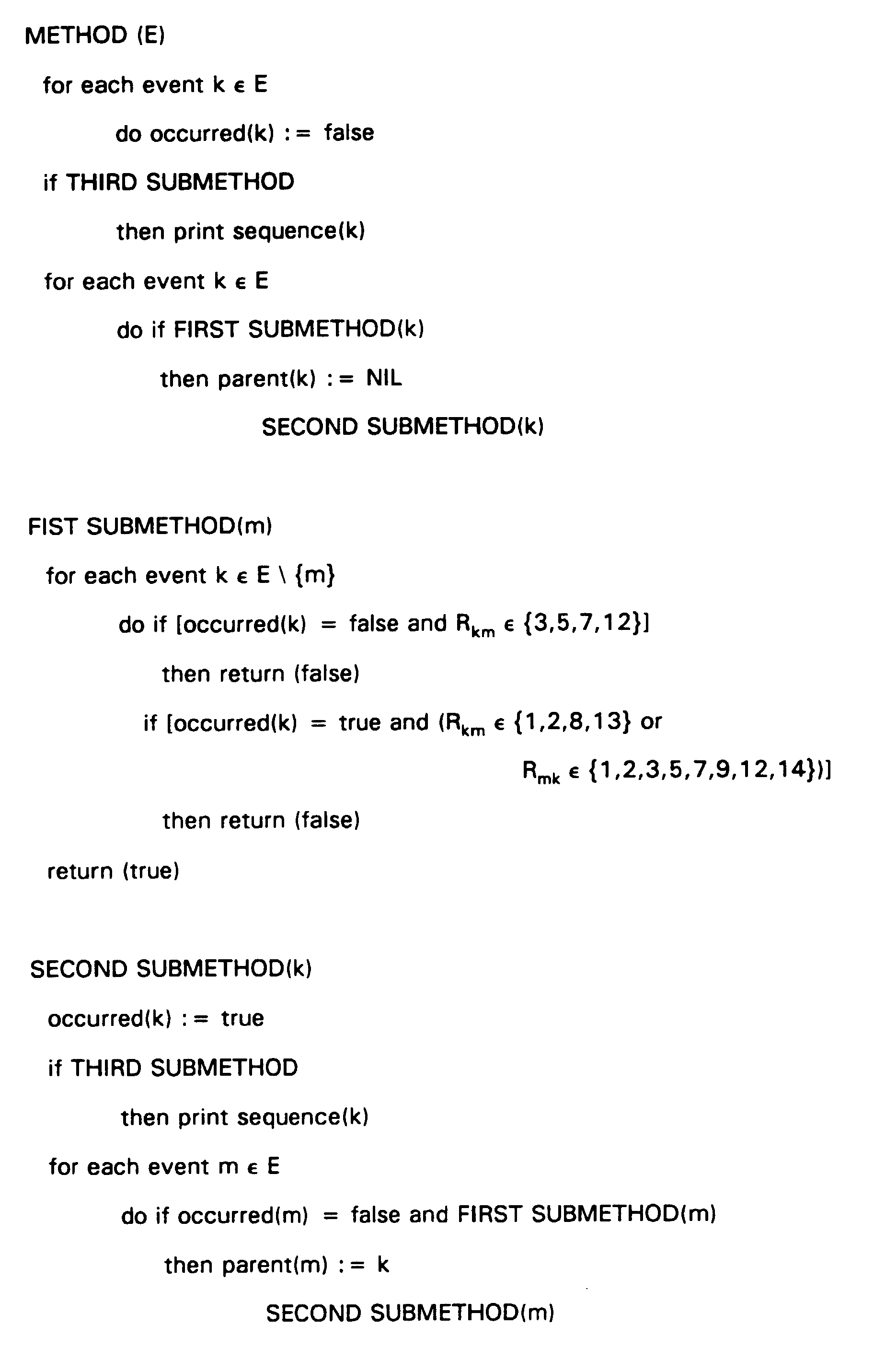 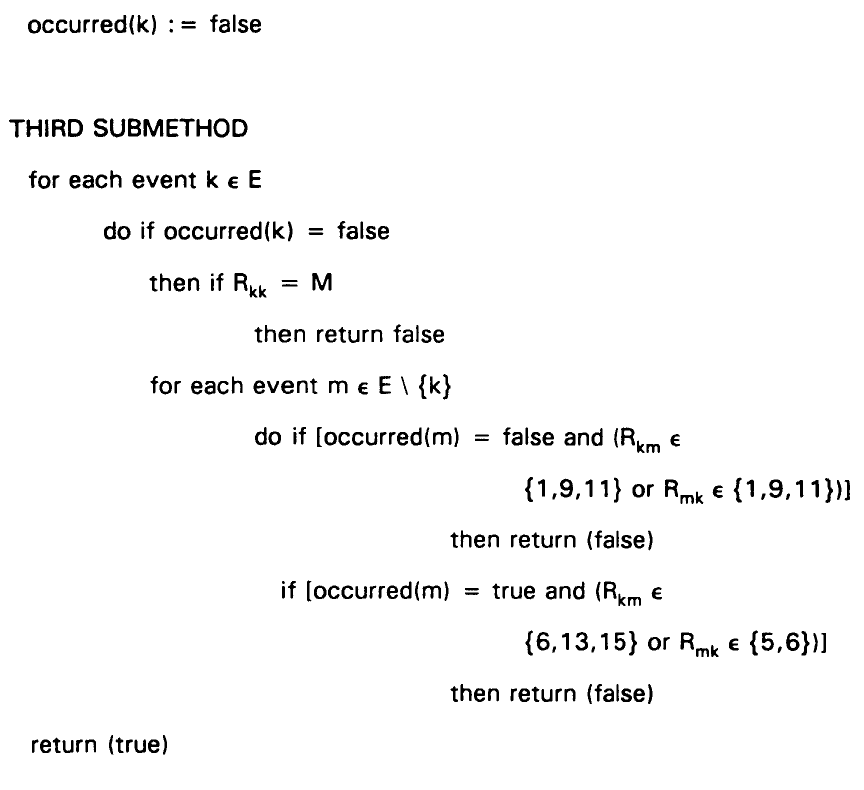 With reference to the algorithm written in a kind of BASIC language, a test of the following protocol will be worked out as an example, using three events r, s and t for which the following holds good:
- Rᵣᵣ = M (i.e. the condition concerning the event r specifies that the occurrence of event r is mandatory).
- Rₛₛ = O (i.e. the condition concerning the event s specifies that the occurrence of event s is not mandatory).
- Rₜₜ = M (i.e. the condition concerning the event t specifies that the occurrence of event t is mandatory).
- Rᵣₛ = 10 (i.e. Set No. 10 "r or (r,s) or (s,r)", in other words the event r will certainly occur, possibly in combination with the event s, the sequential order being unimportant).
- Rᵣₜ = 3 (i.e. Set No. 3 "(r,t)", in other words the events r and t both occur, in this sequential order as mentioned).
- Rₜₛ = 8 (i.e. Set No. 8 "t or (s,t)", in other words the event t will certainly occur, possibly in combination with the event s, and if the event s does occur, this happens prior to the occurrence of the event t).

The method according to the invention first of all defines all the events r, s and t as not occurred (for each event k ∈ E do occurred(k): = false). The third submethod is then applied (if THIRD SUBMETHOD then print sequence(k)), which, because the occurrence of the events r and t is mandatory (Rᵣᵣ = Rₜₜ = M) but the events have still not occurred, indicates that the sequence of allowed events (at this moment comprising no events) is not yet complete (for each event k ∈ E do if occurred(k) = false then if Rₖₖ = M then return false). Hereafter, the first submethod is applied to the event r (for each event k ∈ E do if FIRST SUBMETHOD(k)). Because the events s and t have not yet occurred and the following does not hold good: Rₛᵣ or Rₜᵣ ∈ {3,5,7,12}, it is found that the event r is permitted to occur as the first event (do if [occurred(k) = false and Rₖₘ ∈ {3,5,7,12}] then return (false), otherwise return (true)), and the second submethod is applied to the event r (the parent of r is nil) in order to find a subsequent allowed event (then parent(k): = NIL, SECOND SUBMETHOD (k)).

According to the second submethod, first of all the event r is defined as being an event which has occurred (occurred(k): = true), and the third submethod is applied (if THIRD SUBMETHOD then print sequence(k)), which, because the occurrence of the event t is mandatory (Rₜₜ = M) but the event has not yet occurred, indicates that the sequence of allowed events (at this moment consisting of the event r) is not yet complete (for each event k ∈ E do if occurred(k) = false then if Rₖₖ = M then return false). The first submethod is then applied to the event s, using the events s and t as events which have not occurred and the event r as an event which has occurred (for each event m ∈ E do if occurred (m) = false and FIRST SUBMETHOD(m)). Because the event r has occurred and Rᵣₛ = 10 and Rₛᵣ = undefined and the event t has not occurred and Rₜₛ = 8 it is found that the event s is permitted to occur as the second event after the first event r (do if [occurred(k) = false and Rₖₘ ∈ {3,5,7,12}] then return (false), if [occurred(k) = true and (Rₖₘ ∈ {1,2,8,13} or Rₘₖ ∈ {1,2,3,5,7,9,12,14})] then return (false), otherwise return (true)), and the second submethod is applied to the event s (the parent of s is r) in order to find a subsequent allowed event (then parent(m): = k, SECOND SUBMETHOD(m)).

According to the second submethod, first of all the event s is defined as being an event which has occurred (occurred(k): = true), and the third submethod is applied (if THIRD SUBMETHOD then print sequence(k)), which, because the occurrence of the event t is mandatory (Rₜₜ = M) but the event has not yet occurred, indicates that the sequence of allowed events (at this moment consisting of the events r and s) is not yet complete (for each event k ∈ E do if occurred(k) = false then if Rₖₖ = M then return false). The first submethod is then applied to the event t, using the event t as events which have not occurred and the events r and s as events which have occurred (for each event m ∈ E do if occurred (m) = false and FIRST SUBMETHOD(m)). Because the events r and s have occurred and Rᵣₜ = 3 and Rₜₛ = 8 it is found that the event t is permitted to occur as the third event after the first event r and the second event s (do if [occurred(k) = true and (Rₖₘ ∈ {1,2,8,13} or Rₘₖ ∈ {1,2,3,5,7,9,12,14})] then return (false), otherwise return (true)), and the second submethod is applied to the event t (the parent of t is s) in order to find a subsequent allowed event (then parent(m): = k, SECOND SUBMETHOD(m)).

According to the second submethod, first of all the event t is defined as being an event which has occurred (occurred(k): = true), and the third submethod is applied (if THIRD SUBMETHOD then print sequence (k)), which, because all events r, s and t have now occurred, indicates that the sequence of allowed events, (at this moment consisting of the events r, s and t) is complete, which sequential order of events is recorded (then print sequence (k)).

The first submethod is then applied to the event t, using the events s and t as events which have not occurred and the event r as an event which has occurred (for each event m ∈ E do if occurred (m) = false and FIRST SUBMETHOD(m)). Because the event r has occurred and Rᵣₜ = 3 and Rₜᵣ = undefined and the event s has not occurred and Rₛₜ = undefined it is found that the event t is permitted to occur as the second event after the first event r (do if [occurred(k) = false and Rₖₘ ∈ {3,5,7,12}] then return (false), if [occurred(k) = true and (Rₖₘ ∈ {1,2,8,13} or Rₘₖ ∈ {1,2,3,5,7,9,12,14})] then return (false), otherwise return (true)), and the second submethod is applied to the event t (the parent of t is r) in order to find a subsequent allowed event (then parent(m): = k, SECOND SUBMETHOD(m)).

According to the second submethod, first of all the event t is defined as being an event which has occurred (occurred(k): = true), and the third submethod is applied (if THIRD SUBMETHOD then print sequence(k)), which, because the occurrence of the events r and t is mandatory (Rᵣᵣ = Rₜₜ = M) and the events have occurred, and because the event s has not occurred while the following holds good: Rᵣₛ = 10, Rᵣₜ = 3 and Rₜₛ = 8, indicates that the sequence of allowed events (at this moment consisting of the events r and t) is complete, which sequential order of events is recorded (then print sequence(k)).

Thereafter, the first submethod is applied to the event s (for each event k ∈ E do if FIRST SUBMETHOD(k)). Because the events r and t have not yet occurred (the second submethod terminates with the redefinition of the event in question as an event which has not occurred, occurred(k): = false) and the following does not hold good: Rᵣₛ or Rₜₛ ∈ {3,5,7,12}, it is found that the event s is permitted to occur as the first event (do if [occurred(k) = false and Rₖₘ ∈ {3,5,7,12}] then return (false), otherwise return (true)), and the second submethod is applied to the event s (the parent of s is nil) in order to find a subsequent allowed event (then parent(k): = NIL, SECOND SUBMETHOD(k)).

According to the second submethod, first of all the event s is defined as being an event which has occurred (occurred(k): = true), and the third submethod is applied (if THIRD SUBMETHOD then print sequence(k)), which, because the occurrence of the events r and t is mandatory (Rᵣᵣ = Rₜₜ = M) but the event has not yet occurred, indicates that the sequence of allowed events (at this moment consisting of the event s) is not yet complete (for each event k ∈ E do if occurred(k) = false then if Rₖₖ = M then return false). The first submethod is then applied to the event r, using the events r and t as events which have not occurred and the event s as an event which has occurred (for each event m ∈ E do if occurred (m) = false and FIRST SUBMETHOD(m)). Because the event s has occurred and Rᵣₛ = 10 and Rₛᵣ = undefined and the event t has not occurred and Rₜₛ = 8 it is found that the event r is permitted to occur as the second event after the first event s (do if [occurred(k) = false and Rₖₘ ∈ {3,5,7,12}] then return (false), if [occurred(k) = true and (Rₖₘ ∈ {1,2,8,13} or Rₘₖ ∈ {1,2,3,5,7,9,12,14})] then return (false), otherwise return (true)), and the second submethod is applied to the event r (the parent of r is s) in order to find a subsequent allowed event (then parent(m): = k, SECOND SUBMETHOD(m)).

According to the second submethod, first of all the event r is defined as being an event which has occurred (occurred(k): = true), and the third submethod is applied (if THIRD SUBMETHOD then print sequence(k)), which, because the occurrence of the event t is mandatory (Rₜₜ = M) but the event has not yet occurred, indicates that the sequence of allowed events (at this moment consisting of the events s and r) is not yet complete (for each event k ∈ E do if occurred(k) = false then if Rₖₖ = M then return false). The first submethod is then applied to the event t, using the event t as event which has not occurred and the events s and r as events which have occurred (for each event m ∈ E do if occurred (m) = false and FIRST SUBMETHOD(m)). Because the events s and r have occurred and Rᵣₜ = 3 and Rₜᵣ = undefined and Rₛₜ = undefined and Rₜₛ = 8 it is found that the event t is permitted to occur as the third event after the first event s and the second event r (do if [occurred(k) = true and (Rₖₘ ∈ {1,2,8,13} or Rₘₖ ∈ {1,2,3,5,7,9,12,14})] then return (false), otherwise return (true)), and the second submethod is applied to the event t (the parent of t is r) in order to find a subsequent allowed event (then parent(m): = k, SECOND SUBMETHOD(m)).

According to the second submethod, first of all the event t is defined as being an event which has occurred (occurred(k): = true), and the third submethod is applied (if THIRD SUBMETHOD then print sequence (k)), which, because all events s, r and t have now occurred, indicates that the sequence of allowed events (at this moment consisting of the events s, r and t) is complete, which sequential order of events is recorded (then print sequence (k)).

The first submethod is then applied to the event t, with the events r and t as events which have not occurred and the event s as an event which has occurred (for each event m ∈ E do if occurred(m) = false and FIRST SUBMETHOD(m)). Because the event r has not occurred and Rᵣₜ = 3 it is found that the event t is NOT permitted as the second event after the first event s (do if [occurred(k) = false and Rₖₘ ∈ {3,5,7,12}] then return (false), otherwise return (true)) and the second submethod is NOT proceeded with.

Thereafter, the first submethod is applied to the event t (for each event k ∈ E do if FIRST SUBMETHOD(k)). Because the events r and s have not yet occurred (the second submethod terminates with the redefinition of the event in question as an event which has not occurred, occurred(k): = false) and Rᵣₜ ∈ {3,5,7,12} holds good, it is found that the event t is NOT permitted to occur as the first event (do if [occurred(k) = false and Rₖₘ ∈ {3,5,7,12}] then return (false), otherwise return (true)) and the second submethod is NOT proceeded with.

Thus the algorithm is used to find three possible sequences of allowed events for the protocol mentioned: (r,s,t), (r,t) and (s,r,t). Based on the conditions and relationships associated with said protocol, these three sequences can be derived in a simple manner in one's head. If the protocol becomes more complex, however, (for example containing ten events with ten conditions and fifteen relationships), such sequences can no longer be derived from one's head and/or by writing them out and the algorithm (the method according to the invention) provides the valid solution in an efficient manner.

An algorithm of this type can be stored as software in a PC in a manner which is straightforward to those skilled in the art. The system for application of the method is indeed, in the first instance, meant to refer to a PC or microprocessing means. The means for storing event codes, status codes, relationship codes, combination codes and occurrence codes are then formed by the memory of the PC, and the associated microprocessor is designed for performing analyses of first, second and third types (corresponding to the first, second and third submethod) by means of instructions stored as software which call up, in a particular sequential order, the contents of the means, possibly change and compare them and again store them changed or unchanged.

It would, however, also be possible to implement the system specially for application of this method according to the invention, the means for storing (memory ICs) being coupled to a computing device via which the contents of the means are loaded, whereupon the computing device interrogates these contents in a particular sequential order, possibly changes and compares them and then stores them again changed or unchanged.

## Claims

1. Method for testing a protocol in which events occur which have defined relationships with one another, characterised in that
- the method comprises a first submethod for determining whether an event y is permitted to occur by
- checking, if a further event x has not occurred, whether a relationship between the event x and the event y implies that the event y is not permitted to occur before the event x has occurred, in which case the combination is not allowed,
- checking, if a further event x has occurred, whether a relationship between the event x and the event y implies that the event y is not permitted to occur after the event x has occurred and whether a relationship between the event y and the event x implies that the event x is not permitted to precede the event y, in which cases the combination is not allowed,
- establishing, in all other cases, that the combination is allowed and repeating the first submethod in order to determine whether the event y is permitted to occur in combination with another further event,
- the method comprises a second submethod for finding a subsequent allowed event q in the case of an event p by
- defining the event p as being an event which has occurred and appending it to a sequence of allowed events which have occurred,
- repeating, if the event q has already occurred, the second submethod in order to find another subsequent allowed event,
- checking, if the event q has not occurred, by applying the first submethod whether the event q is permitted to occur in combination with the event p, and by
- appending, in the case of an allowed combination, the event q to a sequence of allowed events which have occurred and repeating the second submethod in order to find a subsequent allowed event in the case of the event q,
- repeating, in the case of a non-allowed combination, the second submethod in order to find another subsequent allowed event in the case of the event p, and
- redefining the event p as being an event which has not occurred and removing it from the sequence of allowed events which have occurred,
- the method finds all possible sequences of allowed events by
- applying the first submethod to every possible first event, and
- applying the second submethod to all possible first events found.

2. Method according to Claim 1, characterised in that the method comprises a third submethod for determining whether a sequence of allowed events is complete, a condition specifying, of each event, whether the occurrence of this event is or is not mandatory, by
- checking, if an arbitrarily chosen event v has not occurred, whether a condition relating to the event v implies that the event v must occur, in which case the sequence is not complete, and in the other case, if the arbitrarily chosen event v has not occurred, by
- checking, if a further event w has not occurred, whether a relationship between the event v and the event w and a relationship between the event w and the event v imply that at least one of the two events v and w must occur, in which case the sequence is not complete,
- checking, if the further event w has occurred, whether a relationship between the event v and the event w and a relationship between the event w and the event v imply that, if the event w has occurred, the event v must occur likewise, in which case the sequence is not complete, and
- repeating the third submethod with another further event, and
- repeating, if the arbitrarily chosen event v has occurred, the third submethod with another arbitrarily chosen event in order to determine whether a sequence of allowed events is complete.

3. System for applying the method according to Claim 1, characterised in that the system is provided with means for storing
- at least one event code which is representative for an event which may occur,
- at least one status code which is representative for a status of this event,
- at least one relationship code which is representative for a relationship between this event and another event, and
- at least one combination code which is representative for the allowedness of a combination of events,
in which the system, for determining whether an event y is permitted to occur, is designed for an analysis of a first type by
- disallowing, in the case of a status code related to a further event x having a first value and a relationship code related to the events x and y having a first value, the combination and assigning a negative combination code,
- disallowing, in the case of a status code related to a further event x having a second value and a relationship code related to the events x and y having a second value and a relationship code related to the events y and x having a third value, the combination and assigning a negative combination code,
- allowing, in all other cases, the combination and assigning a positive combination code and repeating the analysis of a first type for determining whether the event y is permitted to occur in combination with another further event,
in which the system, for finding a subsequent allowed event q in the case of an event p, is designed for an analysis of a second type by
- assigning a status code having a second value to the event p and appending the event p to a sequence of allowed events which have occurred,
- repeating, in the case of a status code having a second value related to event q, the analysis of a second type for finding another subsequent allowed event,
- performing, in the case of a status code having a first value related to event q, an analysis of a first type for determining whether the event q is permitted to occur in combination with the event p and by
- appending, in the case of a positive combination code, the event q to a sequence of allowed events which have occurred and performing an analysis of a second type for finding a subsequent allowed event in the case of the event q, and
- performing, in the case of a negative combination code, an analysis of a second type for finding another subsequent allowed event in the case of the event p,
- assigning a status code having a first value to the event p and removing the event p from a sequence of allowed events which have occurred,
in which the system, for finding all possible sequences of allowed events, is designed for
- performing an analysis of a first type for every possible first event,
- performing an analysis of a second type for all possible first events found.

4. System according to Claim 3, characterised in that the system is provided with means for storing at least one occurrence code which is representative for the mandatory occurrence of an event, which system, for determining whether a sequence of allowed events is complete, is designed for an analysis of a third type by
- establishing, in the case of a status code, related to an arbitrarily chosen event v, having a first value and a positive occurrence code related to the arbitrarily chosen event v, that a sequence is incomplete and by, in the case of a negative occurrence code related to the arbitrarily chosen event v and of a status code, related to the arbitrarily chosen event v, having a first value
- establishing, in the case of a status code, related to a further event w, having a first value and a relationship code, related to the events v and w, having a fourth value and a relationship code, related to the events w and v, having a fifth value, that a sequence is incomplete,
- establishing, in the case of a status code, related to a further event w, having a second value and a relationship code, related to the events v and w, having a sixth value and a relationship code, related to the events w and v, having a seventh value, that a sequence is incomplete,
- subsequently performing an analysis of a third type with another further event w, and
- performing, in the case of a status code, related to an arbitrarily chosen event v, having a second value, an analysis of a third type with another arbitrarily chosen event to determine whether a sequence of allowed events is complete.

## Patentansprüche

1. Verfahren zur Prüfung eines Protokolls, bei dem Ereignisse stattfinden, die zueinander definierte Beziehungen aufweisen, **dadurch gekennzeichnet,**
- dass das Verfahren ein erstes Unterverfahren aufweist, um festzustellen, ob es einem Ereignis y gestattet ist stattzufinden durch
- Prüfen, ob ein weiteres Ereignis x nicht stattgefunden hat, ob eine Beziehung zwischen dem Ereignis x und dem Ereignis y impliziert, dass das Ereignis y nicht stattfinden darf, bevor nicht das Ereignis x stattgefunden hat, in welchem Fall die Kombination nicht erlaubt ist,
- Prüfen, ob ein weiteres Ereignis x stattgefunden hat, ob eine Beziehung zwischen dem Ereignis x und dem Ereignis y impliziert, dass das Ereignis y nicht stattfinden darf, nachdem das Ereignis x stattgefunden hat, und ob eine Beziehung zwischen dem Ereignis y und dem Ereignis x impliziert, dass das Ereignis x nicht vor dem Ereignis y stattfinden darf, in welchen Fällen die Kombination nicht erlaubt ist,
- Feststellen in allen anderen Fällen, dass die Kombination erlaubt ist, und Wiederholen des ersten Unterverfahrens, um zu bestimmen, ob das Ereignis y in Kombination mit einem anderen weiteren Ereignis auftreten darf,
- dass das Verfahren ein zweites Unterverfahren aufweist, um ein nachfolgendes erlaubtes Ereignis q im Falle eines Ereignisses p aufzufinden durch
- Definieren des Ereignisses p als Ereignis, das stattgefunden hat, und Anhängen desselben an eine Abfolge von erlaubten Ereignissen, die stattgefunden haben,
- Wiederholen des zweiten Unterverfahrens, falls das Ereignis q bereits stattgefunden hat, um ein weiteres nachfolgendes erlaubtes Ereignis aufzufinden,
- Prüfen durch Anwendung des ersten Unterverfahrens, falls das Ereignis q nicht stattgefunden hat, ob es dem Ereignis q gestattet ist in Kombination mit dem Ereignis p stattzufinden, und
- Anhängen im Falle einer erlaubten Kombination des Ereignisses q an eine Abfolge von erlaubten Ereignissen, die stattgefunden haben und Wiederholen des zweiten Unterverfahrens, um ein nachfolgendes erlaubtes Ereignis im Falle des Ereignisses q zu finden,
- Wiederholen des zweiten Unterverfahrens im Falle einer nicht erlaubten Kombination, um ein weiteres nachfolgendes erlaubtes Ereignis im Falle des Ereignisses p aufzufinden, und
- Redefinieren des Ereignisses p als Ereignis, welches nicht stattgefunden hat, und Entfernen desselben von der Abfolge von erlaubten Ereignissen, die stattgefunden haben,
- wobei das Verfahren alle möglichen Abfolgen von erlaubten Ereignissen findet durch
- Anwenden des ersten Unterverfahrens auf jedes mögliche erste Ereignis, und
- Anwenden des zweiten Unterverfahrens auf alle möglichen aufgefundenen ersten Ereignisse.

2. Verfahren nach Anspruch 1, dadurch gekennzeichnet, dass das Verfahren ein drittes Unterverfahren umfasst, um festzustellen, ob eine Abfolge von erlaubten Ereignissen vollständig ist, wobei eine Bedingung für jedes Ereignis festlegt, ob das Auftreten dieses Ereignisses notwendig ist oder nicht, durch
- Prüfen, ob ein willkürlich gewähltes Ereignis v nicht stattgefunden hat, ob eine das Ereignis v betreffende Bedingung impliziert, dass das Ereignis v auftreten muss, wobei in diesem Falle die Abfolge nicht vollständig ist und wobei im anderen Falle, dass das willkürlich gewählte Ereignis v nicht stattgefunden hat, durch
- Prüfen ob ein weiteres Ereignis w nicht stattgefunden hat, ob eine Beziehung zwischen dem Ereignis v und dem Ereignis w und zwischen dem Ereignis w und dem Ereignis v impliziert, dass zumindest eines der zwei Ereignisse v und w stattfinden muss, in welchem Fall die Abfolge nicht vollständig ist,
- Prüfen, ob ein weiteres Ereignis w stattgefunden hat, ob eine Beziehung zwischen dem Ereignis v und dem Ereignis w und eine Beziehung zwischen dem Ereignis w und dem Ereignis v impliziert, dass das Ereignis v gleichfalls stattfinden muss, nach dem das Ereignis w stattgefunden hat, in welchen Fall die Abfolge nicht vollständig ist, und
- Wiederholen des dritten Unterverfahrens mit einem anderen weiteren Ereignis, und
Wiederholen, falls das willkürlich gewählte Ereignis v stattgefunden hat, des dritten Unterverfahrens mit einem anderen willkürlich gewählten Ereignis, um festzustellen, ob eine Abfolge von erlaubten Ereignissen vollständig ist.

3. System zur Durchführung des Verfahrens nach Anspruch 1, dadurch gekennzeichnet, dass das System versehen ist mit Mitteln zum Speichern von
- mindestens einem Ereigniscode, der für ein möglicherweise eintretendes Ereignis repräsentativ ist,
- mindestens einem Statuscode, der für einen Zustand dieses Ereignisses repräsentativ ist,
- mindestens einem Beziehungscode, der für eine Beziehung zwischen diesem Ereignis und einem anderen Ereignis repräsentativ ist, und
- mindestens einem Kombinationscode, der für das Erlaubtsein einer Kombination von Ereignissen repräsentativ ist, wobei dieses System zur Bestimmung, ob ein Ereignis y stattfinden kann, für eine Analyse eines ersten Typs ausgestaltet ist durch
- Untersagen im Falle eines Statuscodes, der einem weiteren Ereignis x zugewiesen ist und der einen ersten Wert aufweist, und eines Beziehungscodes, der den Ereignissen x und y zugewiesen ist und der einen ersten Wert aufweist, der Kombination und Zuweisen eines negativen Kombinationscodes,
- Untersagen im Falle eines Statuscodes, der einem weiteren Ereignis x zugewiesen ist und der einen zweiten Wert aufweist, und eines Beziehungscodes, der den Ereignissen x und y zugewiesen ist und der einen zweiten Wert aufweist, und eines Beziehungscodes, der den Ereignissen y und x zugewiesen ist und der einen dritten Wert aufweist, der Kombination und Zuweisen eines negativen Kombinationscodes,
- Gestatten der Kombination in allen anderen Fällen und Zuweisen eines positiven Kombinationscodes und Wiederholen der Analyse des ersten Typs zur Feststellung, ob das Ereignis y stattfinden darf in Kombination mit einem anderen weiteren Ereignis,
wobei dieses System zum Auffinden eines nachfolgenden erlaubten Ereignisses q im Falle eines Ereignisses p für eine Analyse eines zweiten Typs ausgestaltet ist durch
- Zuweisen eines Statuscodes mit einem zweiten Wert zu dem Ereignis p und Hinzufügen des Ereignisses p zu der Abfolge von erlaubten Ereignissen, die stattgefunden haben,
- Wiederholen im Falle eines Statuscodes mit einem zweiten Wert, der dem Ereignis q zugewiesen ist, der Analyse des zweiten Typs zum Auffinden eines anderen nachfolgenden erlaubten Ereignisses,
- Durchführen im Falle eines Statuscodes mit einem ersten Wert, der dem Ereignis q zugewiesen ist, einer Analyse des ersten Typs zum Feststellen, ob das Ereignis q in Kombination mit dem Ereignis p stattfinden darf und durch
- Hinzufügen im Falle eines positiven Kombinationscodes des Ereignisses q zu einer Abfolge von erlaubten Ereignissen, die stattgefunden haben und Durchführen einer Analyse eines zweiten Typs zum Auffinden eines nachfolgenden erlaubten Ereignisses im Falle des Ereignisses q, und
- Durchführen im Falle eines negativen Kombinationscodes einer Analyse des zweiten Typs zum Auffinden eines anderen nachfolgenden erlaubten Ereignisses im Falle des Ereignisses p,
- Zuweisen eines Statuscodes mit einem ersten Wert zum Ereignis p und Entfernen des Ereignisses p aus der Abfolge von erlaubten Ereignissen, die stattgefunden haben,
wobei das System zum Auffinden von allen möglichen Abfolgen von erlaubten Ereignissen ausgestaltet ist zum
- Durchführen einer Analyse eines ersten Typs für jedes mögliche erste Ereignis,
- Durchführen einer Analyse eines zweiten Typs für alle aufgefundenen möglichen ersten Ereignisse.

4. System nach Anspruch 3, dadurch gekennzeichnet, dass das System mit Mitteln zum Speichern von mindestens einem Auftretenscode versehen ist, der für das notwendige Auftreten eines Ereignisses repräsentativ ist, wobei das System zur Feststellung, ob eine Abfolge von erlaubten Ereignissen vollständig ist, für eine Analyse eines dritten Typs ausgestaltet ist durch
- Feststellen im Falle eines Statuscodes, der einem willkürlich gewählten Ereignis v zugewiesen ist und der einen ersten Wert aufweist, und eines positiven Auftretenscodes, der dem willkürlich gewählten Ereignis v zugewiesen ist, dass eine Abfolge nicht vollständig ist und im Falle eines negativen Auftretenscodes, der dem willkürlich gewählten Ereignis v zugewiesen ist, und eines Statuscodes, der dem willkürlich gewählten Ereignis v zugewiesen ist und der einen ersten Wert aufweist,
- Feststellen im Falle eines Statuscodes, der einem weiteren Ereignis w zugewiesen ist und der einen ersten Wert aufweist, und eines Beziehungscodes, der den Ereignissen v und w zugewiesen ist und der einen vierten Wert aufweist, und eines Beziehungscodes, der den Ereignissen w und v zugewiesen ist und der einen fünften Wert aufweist, dass eine Abfolge nicht vollständig ist,
- Feststellen im Falle eines Statuscodes, der einem weiteren Ereignis w zugewiesen ist und der einen zweiten Wert aufweist, und eines Beziehungscodes, der den Ereignissen v und w zugewiesen ist und der einen sechsten Wert aufweist, und eines Beziehungscodes, der den Ereignissen w und v zugewiesen ist und der einen siebten Wert aufweist, dass eine Abfolge nicht vollständig ist,
- nachfolgendes Durchführen einer Analyse eines dritten Typs mit einem anderen weiteren Ereignis w, und
- Durchführen im Falle eines Statuscodes, der einem willkürlich gewählten Ereignis v zugewiesen ist und der einen zweiten Wert aufweist, einer Analyse eines dritten Typs mit einem anderen willkürlich gewählten Ereignis, um festzustellen, ob eine Abfolge von erlaubten Ereignissen vollständig ist.

## Revendications

1. Méthode de test d'un protocole dans lequel se produisent des évènements qui a défini des relations entre eux, caractérisée en ce que
- la méthode comprend une première sous-méthode pour déterminer si un événement y est autorisé à se produire par
- contrôle, si un autre évènement x ne s'est pas produit, si une relation entre l'événement x et l'événement y implique que l'événement y n'est pas autorisé à se produire avant que l'événement x se soit produit, auquel cas la combinaison n'est pas autorisée,
- contrôle, si un autre événement x s'est produit, si une relation entre l'événement x et l'événement y implique que l'événement y n'est pas autorisé à se produire après que l'événement x s'est produit et si une relation entre l'événement y et l'événement x implique que l'événement x n'est pas autorisé à précéder l'événement y, auxquels cas la combinaison n'est pas autorisée,
- établissement, dans tous les autres cas, que la combinaison est autorisée et répétition de la première sous-méthode afin de déterminer si l'événement y est autorisé à se produire en combinaison avec encore un autre événement,
- la méthode comprend une seconde sous-méthode pour trouver un événement autorisé suivant q dans le cas d'un événement p par
- définition de l'événement p comme étant un évènement qui s'est produit et son annexion à une séquence d'évènements autorisés qui se sont produits,
- répétition, si l'événement q s'est déjà produit, de la seconde sous-méthode afin de trouver un autre événement autorisé suivant,
- contrôle, si l'événement q ne s'est pas produit, par application de la première sous-méthode, si l'événement q est autorisé à se produire en combinaison avec l'événement p, et par
- annexion, dans le cas d'une combinaison autorisée, de l'événement q à une séquence d'évènements autorisés qui se sont produits et répétition de la seconde sous-méthode afin de trouver un évènement autorisé suivant dans le cas de l'événement q,
- répétition, dans le cas d'une combinaison non autorisée, de la seconde sous-méthode afin de trouver un autre événement autorisé suivant dans le cas de l'événement p, et
- redéfinition de l'événement p comme étant un évènement qui ne s'est pas produit et son retrait de la séquence d'évènements autorisés qui se sont produits,
- la méthode trouve toutes les séquences possibles d'évènements autorisés par
- application de la première sous-méthode à chaque premier évènement possible, et
- application de la seconde sous-méthode à tous les premiers évènements possibles trouvés.

2. Méthode selon la revendication 1, caractérisée en ce que la méthode comprend une troisième sous-méthode pour déterminer si une séquence d'évènements autorisés est terminée, une condition spécifiant, pour chaque évènement, si l'apparition de cet événement est ou n'est pas obligatoire, par
- contrôle, si un évènement arbitrairement choisi v ne s'est pas produit, si une condition relative à l'événement v implique que l'événement v doive se produire, auquel cas la séquence n'est pas terminée, et, dans l'autre cas, si l'événement choisi arbitrairement v ne s'est pas produit, par
- contrôle, si un autre évènement w ne s'est pas produit, si une relation entre l'événement v et l'événement w et une relation entre l'événement w et l'évènement v impliquent qu'au moins l'un des deux évènements v et w doive se produire, auquel cas la séquence n'est pas terminée,
- contrôle, si l'autre évènement w s'est produit, si une relation entre l'événement v et l'événement w et une relation entre l'événement w et l'événement v impliquent que, si l'événement w s'est produit, l'événement v doive se produire également, auquel cas la séquence n'est pas terminée, et
- répétition de la troisième sous-méthode avec encore un autre évènement, et
- répétition, si l'événement choisi arbitrairement v s'est produit, de la troisième sous-méthode avec un autre évènement choisi arbitrairement afin de déterminer si une séquence d'évènements autorisés est terminée.

3. Système pour appliquer la méthode selon la revendication 1, caractérisé en ce que le système est pourvu de moyens pour stocker
- au moins un code d'évènement qui est représentatif pour un évènement qui peut se produire,
- au moins un code d'état qui est représentatif pour un état de cet évènement,
- au moins un code de relation qui est représentatif pour une relation entre cet évènement et un autre évènement, et
- au moins un code de combinaison qui est représentatif pour l'état d'autorisation d'une combinaison d'événements,
où le système, pour déterminer si un évènement y est autorisé à se produire, est conçu pour une analyse d'un premier type par
- interdiction, dans le cas d'un code d'état relatif à un autre événement x ayant une première valeur et d'un code de relation relatif aux évènements x et y ayant une première valeur, de la combinaison et attribution d'un code de combinaison négatif,
- interdiction, dans le cas d'un code d'état relatif à un autre évènement x ayant une deuxième valeur et d'un code de relation relatif aux évènements x et y ayant une deuxième valeur et d'un code de relation relatif aux événements y et x ayant une troisième valeur, de la combinaison et attribution d'un code de combinaison négatif,
- autorisation, dans tous les autres cas, de la combinaison et attribution d'un code de combinaison positif et répétition de l'analyse d'un premier type pour déterminer si l'événement y est autorisé à se produire en combinaison avec encore un autre évènement, où le système, pour trouver un évènement autorisé suivant q dans le cas d'un évènement p, est conçu pour une analyse d'un second type par
- attribution d'un code d'état ayant une deuxième valeur à l'événement p et annexion de l'événement p à une séquence d'évènements autorisés qui se sont produits,
- répétition, dans le cas d'un code d'état ayant une deuxième valeur relatif à un évènement q, de l'analyse d'un second type pour trouver un autre évènement autorisé suivant,
- exécution, dans le cas d'un code d'état ayant une première valeur relatif à un évènement q, d'une analyse d'un premier type pour déterminer si l'événement q est autorisé à se produire en combinaison avec l'événement p et par
- annexion, dans le cas d'un code de combinaison positif, de l'événement q à une séquence d'événements autorisés qui se sont produits et exécution d'une analyse d'un second type pour trouver un évènement autorisé suivant dans le cas de l'événement q, et
- exécution, dans le cas d'un code de combinaison négatif, d'une analyse d'un second type pour trouver un autre évènement autorisé suivant dans le cas de l'événement p,
- attribution d'un code d'état ayant une première valeur à l'événement p et retrait de l'événement p d'une séquence d'évènements autorisés qui se sont produits,
où le système, pour trouver toutes les séquences possibles d'événements autorisés, est conçu pour
- exécuter une analyse d'un premier type pour chaque premier événement possible,
- exécuter une analyse d'un second type pour tous les premiers évènements possibles trouvés.

4. Système selon la revendication 3, caractérisé en ce que le système est pourvu de moyens pour stocker au moins un code d'apparition qui est représentatif pour l'apparition obligatoire d'un évènement, ce système, pour déterminer si une séquence d'évènements autorisés est terminée, étant conçu pour une analyse d'un troisième type par
- établissement, dans le cas d'un code d'état, relatif à un évènement choisi arbitrairement v, ayant une première valeur et d'un code d'apparition positif relatif à l'événement choisi arbitrairement v, qu'une séquence est incomplète et, dans le cas d'un code d'apparition négatif relatif à l'événement choisi arbitrairement v et d'un code d'état, relatif à l'événement choisi arbitrairement v, ayant une première valeur, par
- établissement, dans le cas d'un code d'état, relatif à un autre évènement w, ayant une première valeur et d'un code de relation, relatif aux évènements v et w, ayant une quatrième valeur et d'un code de relation, relatif aux évènements w et v, ayant une cinquième valeur, qu'une séquence est incomplète,
- établissement, dans le cas d'un code d'état, relatif à un autre évènement w, ayant une deuxième valeur et d'un code de relation, relatif aux évènements v et w, ayant une sixième valeur et d'un code de relation, relatif aux évènements w et v, ayant une septième valeur, qu'une séquence est incomplète, et
- exécution ensuite d'une analyse d'un troisième type avec encore un autre évènement w, et
- exécution, dans le cas d'un code d'état, relatif à un événement choisi arbitrairement v, ayant une deuxième valeur, d'une analyse d'un troisième type avec un autre événement choisi arbitrairement pour déterminer si une séquence d'évènements autorisés est terminée.
